# EUROPÄISCHE PATENTSCHRIFT

(11) **EP 3 581 817 B1**
(45) Veröffentlichungstag und Bekanntmachung des Hinweises auf die Patenterteilung: **19.08.2020**
(21) Anmeldenummer: 18177209.6
(22) Anmeldetag: 12.06.2018
(51) Int. Cl.: F16C 29/04, F16C 3/035

(54) **TELESKOPIERBARE HUBVORRICHTUNG**
TELESCOPIC LIFTING DEVICE
DISPOSITIF DE LEVAGE TÉLESCOPIQUE

(43) Veröffentlichungstag der Anmeldung: 18.12.2019
(73) Patentinhaber: Zeilhofer Handhabungstechnik GmbH & Co. KG, 83607 Holzkirchen (DE)
(72) Erfinder: ZEILHOFER, Johann, 83620 Feldkirchen-Westerham (DE); ZEILHOFER, Julian Karl Johannes, 83620 Feldkirchen-Westerham (DE); JOHNEN, Paul Robert, 81667 München (DE); SANDER, Stefan, 83026 Rosenheim (DE)
(74) Vertreter: Vossius & Partner Patentanwälte Rechtsanwälte mbB

(56) Entgegenhaltungen:
- EP-A2- 0 068 930
- EP-B1- 2 766 620
- US-A- 3 427 080
- US-A1- 2009 268 993

## Beschreibung

### Gebiet der Erfindung

Die vorliegende Erfindung betrifft eine teleskopierbare Hubvorrichtung (kurz: Teleskop-Hubvorrichtung) zur linearen Führung von Lasten sowie ein Hubsystem, welches aus mehreren teleskopierbaren Hubvorrichtungen besteht.

### Stand der Technik

Das lineare Führen von Lasten, beispielsweise in Produktionsstraßen, kann mit Hilfe von säulenartigen Vorrichtungen erfolgen, an deren freiem Ende die zu bewegende Last verbunden ist. Solche Vorrichtungen bestehen meist aus mehreren Elementen, die beispielsweise teleskopartig axial zueinander bewegt werden. Hierbei gibt es mindestens ein festes und mindestens ein bewegliches Element. Das bewegliche Element wird durch ein Hebemittel bewegt, welches die zur Führung der Last notwendige Kraft aufbringt.

Aus der EP 2 766 620 B1 ist ein teleskopierendes Führungssystem bekannt, das ein Außenrohr und ein zumindest teilweise innerhalb des Außenrohres geführtes Innenrohr umfasst. An dem Außenrohr ist eine erste Führungseinheit angeordnet, die Rollen umfasst, die mit ihren Mantelflächen die Außenseite des Innenrohres kontaktieren und daran abrollen, wenn sich Außen- und Innenrohr translatorisch zueinander bewegen. Ferner umfasst das Führungssystem eine zweite Führungseinheit, die an dem Innenrohr angeordnet ist und die ebenfalls Rollen umfasst, die mit ihren Mantelflächen die Innenseite des Außenrohres kontaktieren und daran abrollen, wenn sich Außen- und Innenrohr translatorisch zueinander bewegen.

Weiterhin weist das Führungssystem eine Sicherung gegen eine Rotation des Innenrohrs gegenüber dem Außenrohr auf, die als Schiene zwischen Außenrohr und Innenrohr ausgebildet ist.

Das in der EP 2 766 620 B1 beschriebene teleskopierende Führungssystem weist unter Anderem den Nachteil auf, dass durch das Abrollen der Rollen des einen Rohres an der Mantelfläche des jeweils anderen Rohres Abrieb an den Mantelflächen entsteht und somit Beschädigungen auftreten können. Eine entsprechend angepasste Materialwahl der Rohre und Rollen erfordert den früheren Austausch der Rollen, die dabei aus der Führungseinheit entfernt und durch neue ersetzt werden müssen, was mit einem großen Arbeitsaufwand verbunden ist. Weiterhin besteht das Problem, dass der Anpressdruck der Rollen an die jeweilige Mantelfläche nicht einstellbar ist, wodurch sich Maßabweichungen der Rollen oder der Mantelflächen der Rohre nicht kompensieren lassen. Dies kann sich negativ auf den Rollwiderstand auswirken, Spannungsspitzen hervorrufen oder die Teleskopbewegung blockieren.

Die DE 198 59 935 A1 beschreibt eine Hubsäule für das Heben und Senken eines Gegenstandes, wobei die Hubsäule mindestens zwei teleskopierbar ineinander angeordnete Säulenelemente aufweist. Ein Hebemittel greift an einem der bewegbaren Säulenelemente an und ermöglicht somit ein Heben und Senken einer am freien Ende der Hubsäule befestigten Last. Um eine unkontrollierte Absenkung des teleskopierbar ausgezogenen Säulenelementes zu vermeiden, beispielsweise bei einem Ausfall des Hebemittels, ist Sicherungselement vorgesehen, welches die Absenkbewegung blockiert. Hierzu wirkt das Sicherungselement mittelbar oder unmittelbar mit dem Hebemittel über einen Sicherungsmechanismus zusammen.

Die vorliegende Erfindung hat die Aufgabe eine teleskopierbare Hubvorrichtung bereitzustellen, welche einen geringen Platzbedarf aufweist und sich leichtgängig verfahren lässt. Weiterhin soll die vorliegende Erfindung den Wartungs- und Reparaturaufwand im Vergleich zu konventionellen Hubvorrichtungen reduzieren und insbesondere den Austausch von Verschleißteilen vereinfachen.

### Kurzbeschreibung der Erfindung

Die genannten Aufgaben werden durch die Teleskop-Hubvorrichtung sowie das Teleskop-Hubsystem gemäß der unabhängigen Patentansprüche gelöst. Bevorzugte Weiterbildungen sind in den abhängigen Ansprüchen angegeben.

Gemäß einem ersten Aspekt weist die erfindungsgemäße Teleskop-Hubvorrichtung zur linearen Führung von Lasten ein Außenrohr, ein Innenrohr, einen innerhalb des Innenrohrs angebrachten Kolben und eine Führungseinrichtung auf, wobei das Innenrohr zumindest teilweise innerhalb des Außenrohrs geführt wird und der Kolben konfiguriert ist, um das Innenrohr relativ zum Außenrohr in axialer Richtung zu bewegen. Das innere Ende des Innenrohrs weist ferner Rollen auf, die entlang ihrer Rotationsachsen verschieblich gelagert sind, um das Innenrohr relativ zu dem Außenrohr in axialer Richtung zu führen. Die Führungseinrichtung ist am freien Ende der Teleskop-Hubvorrichtung mit dem Außenrohr verbunden und weist ebenfalls Rollen auf, die entlang ihrer Rotationsachsen verschieblich gelagert sind, um das Innenrohr relativ zu dem Außenrohr durch die Führungseinrichtung hindurch in axialer Richtung zu führen.

An der Außenseite des Innenrohrs sowie an der Innenseite des Außenrohrs sind Nuten vorgesehen zur Aufnahme von Führungsschienen. Die Rollen der Führungseinrichtung des Außenrohrs sind so angeordnet, dass sie auf den Führungsschienen des Innenrohrs abrollen und die Rollen des Innenrohrs sind so angeordnet, dass sie auf den Führungsschienen des Außenrohrs abrollen. Außerdem kann das Außenrohr an seiner Außenseite Nuten aufweisen.

Der Querschnitt des Außen- und Innenrohrs der Teleskop-Hubvorrichtung kann ferner eine Achtkantgeometrie aufweisen. Die Geometrie des Querschnitts kann entsprechend der auf die Hubvorrichtung im Anwendungsfall wirkenden Kräfte angepasst werden und beispielsweise rund oder rechteckig sein.

Der Kolben der Teleskop-Hubvorrichtung weist eine Kolbenstange und einen Kolbenkopf auf. Durch die Kolbenstange kann Luft in den Kolbenkopf zugeführt oder aus dem Kolbenkopf abgeführt werden. Hierzu weist der Kolbenkopf mehrere Löcher auf, durch die die zugeführte Luft ausströmen kann bzw. die abzuführende Luft in den Kolbenkopf zuströmen kann. Der Kolben kann pneumatisch, hydraulisch oder elektrisch betrieben werden.

Das äußere Ende des Innenrohrs der Teleskop-Hubvorrichtung kann ferner einen Einsatz aufweisen, der sich ins Innere des Innenrohrs in axialer Richtung erstreckt und aus einem härteren Material als das Innenrohr besteht.

Das innere Ende des Innenrohrs und die Führungseinrichtung des Außenrohrs der Teleskop-Hubvorrichtung weisen jeweils mindestens drei Rollen auf. Im Falle einer geraden Anzahl an Rollen am Innenrohr bzw. in der Führungseinrichtung des Außenrohrs können die Rollen vorzugsweise paarweise einander gegenüberliegen. Falls in der Führungseinrichtung des Außenrohrs vier oder mehr Rollen angebracht sind, können diese Rollen in zwei oder mehr Gruppen unterteilt werden, indem ihre Rotationsachsen in verschiedenen Ebenen rechtwinklig zur Längsachse der Hubvorrichtung angeordnet sind. Vorzugweise wird dabei eine Anordnung gewählt bei der sich mindestens zwei Rollen in einer gemeinsamen Ebene befinden. Ebenfalls bevorzugt ist, wenn diese mindestens zwei Rollen einander gegenüber liegen, sodass möglichst kein Biege- oder Torsionsmoment auf das Innenrohr, aufgrund der Kontaktkraft der Rollen der Führungseinrichtung, ausgeübt wird.

Weiterhin können die Rollen an ihrer Lauffläche eine Nut aufweisen, die mit der jeweiligen Führungsschiene, auf der sie abrollen, zusammenwirkt. Die Rollen des Innenrohres, die in einer Ebene senkrecht zu Längsachse der Hubvorrichtung liegen, können jeweils mit einem Versatz zu den Rollen der Führungseinrichtung angeordnet sein, wobei der Versatz bei vier Rollen am Innenrohr und einer Achtkant-Querschnittgeometrie vorzugsweise 45 Grad beträgt.

Die Teleskop-Hubvorrichtung gemäß des ersten Aspekts kann darüber hinaus mindestens eine Einstelleinrichtung aufweist, die konfiguriert ist, um den Anpressdruck der Rollen der Führungseinrichtung gegen ihre jeweilige Führungsschiene des Innenrohrs einzustellen. Ferner kann die Führungseinrichtung eine Bremseinrichtung beinhalten. Diese wiederrum weist beispielsweise zwei Bremsklötze, auf die einander gegenüberliegen können und konfiguriert sind, um gegen das Innenrohr der Teleskop-Hubvorrichtung gedrückt zu werden. Das Material der Bremsklötze kann weicher sein als das Material des Außen- und Innenrohres. Vorzugsweise bestehen die Bremsklötze aus Kunststoff.

Außerdem kann die Teleskop-Hubvorrichtung eine elektronische Messeinrichtung aufweisen, die konfiguriert ist, um die absolute Position des freien Endes des Innenrohres in axialer Richtung zu erfassen. Die elektronische Messeinrichtung kann in der Führungseinrichtung angebracht sein.

Das Innenrohr der Teleskop-Hubvorrichtung kann ferner mit einem Anschlagelement versehen sein, welches ein vollständiges Ausfahren des Innenrohrs aus dem Außenrohr bei Fehlfunktion verhindert.

In einem weiteren Aspekt der Erfindung ist ein Teleskop-Hubsystem vorgesehen, welches aus mehreren Teleskop-Hubvorrichtungen besteht, die seriell miteinander verbunden sind. Dies umfasst auch Anordnungen bei denen zwei oder mehr Hubvorrichtung in verschiedenen Raumrichtungen orientiert sind.

Sowohl die Teleskop-Hubvorrichtung gemäß eines ersten Aspekts der Erfindung als auch das Teleskop-Hubsystem gemäß eines zweiten Aspekts der Erfindung können ferner mindestens eine pneumatische oder hydraulische Dreh-Durchführungseinrichtung aufweisen, die konfiguriert ist, um den Kolben zu lagern, sodass eine Rotation der Teleskop-Hubvorrichtung um ihre Längsachse ermöglicht wird.

### Kurzbeschreibung der Figuren

Die Erfindung wird anhand der beigefügten Figuren näher erläutert. Es zeigen:
- Fig. 1:: Eine schematische Schnittansicht der erfindungsgemäßen Teleskop-Hubvorrichtung;
- Fig. 2:: Eine schematische Schnittansicht des ersten, freien Endes der Teleskop-Hubvorrichtung gemäß Fig. 1;
- Fig. 3:: Eine schematische Schnittansicht des zweiten, nicht-freien Endes der der Teleskop-Hubvorrichtung gemäß Fig. 1;
- Fig. 4:: Eine schematische Schnittansicht des zweiten, nicht-freien Endes der der Teleskop-Hubvorrichtung gemäß Fig. 3, um 45 Grad in die Zeichenebene gedreht; und
- Fig. 5:: Eine schematische Schnittansicht des Querschnittprofils der Teleskop-Hubvorrichtung gemäß Fig. 1.

### Detaillierte Beschreibung der Erfindung

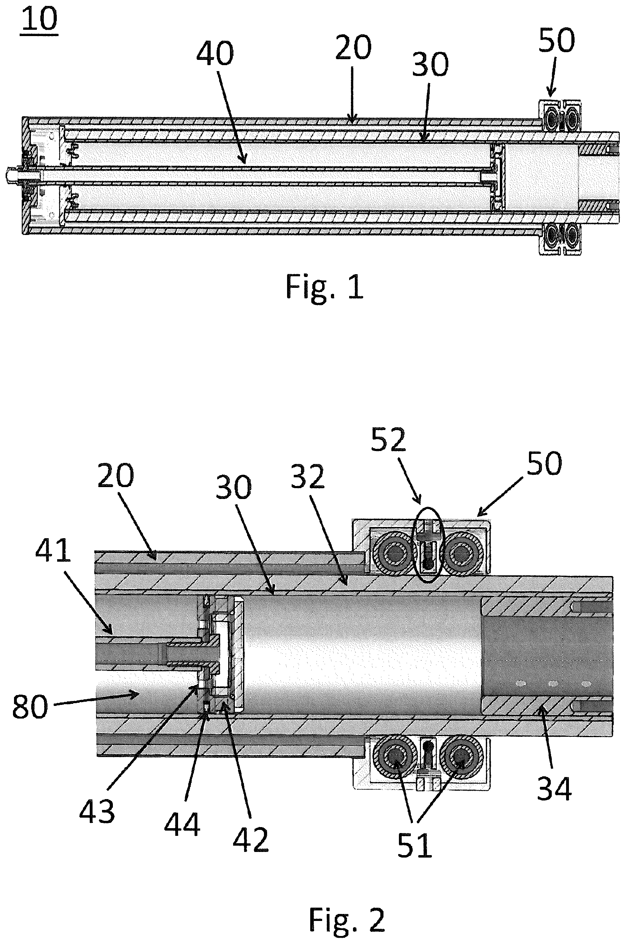

Fig. 1 zeigt eine erfindungsgemäße Teleskop-Hubvorrichtung 10, die ein Außenrohr 20, ein Innenrohr 30, einen Kolben 40 und eine Führungseinrichtung 50 aufweist. Das Innenrohr 30 wird axial innerhalb des Außenrohrs 20 geführt und hat ein freies Ende, an welchem die zu führende Last befestigt wird. Am gleichen Ende der Teleskop-Hubvorrichtung 10 weist das Außenrohr 20 die Führungseinrichtung 50 auf, die unter Anderem dazu dient, das Innenrohr 30 gegenüber dem Außenrohr 20 abzustützen, wodurch es axial zum Außenrohr 20 bewegt werden kann.

Im dargestellten, eingefahrenen Zustand ist die Teleskop-Hubvorrichtung maximal verkürzt und ein Großteil des Innenrohrs 30 befindet sich innerhalb des Außenrohrs 20. Durch eine axiale Bewegung des Innenrohrs 30 relativ zum Außenrohr 20 wird die Gesamtlänge der Teleskop-Hubvorrichtung 10 verändert. Der Kolben 40 ist das Antriebsmittel der Bewegung. Die Kolbenkraft kann entweder pneumatisch, hydraulisch oder elektrisch erzeugt werden. Außerdem können Elemente zwischen Kolben 40 und Innenrohr 30 eingesetzt werden zur Übertragung und/oder Übersetzung der Kolbenkraft.

Wie in Fig. 2 dargestellt ist, besteht der Kolben 40 aus einer Kolbenstange 41 und einem Kolbenkopf 42. Die Kolbenstange 41 kann so ausgeführt sein, dass sie über ein Gewinde als Spindelantrieb fungiert, falls der Kolben elektrisch betrieben wird.

Am entgegengesetzten Ende der Teleskop-Hubvorrichtung 10, dem sogenannten nicht-freien Ende, ist die Teleskop-Hubvorrichtung 10 mit der Umwelt verbunden. Diese Verbindung kann eine ortsfeste Befestigung des Außenrohrs 20 an einem festen Gegenstand der Umwelt, beispielsweise an der Deckenkonstruktion einer Montagehalle, sein. Prinzipiell sind jedoch auch alle weiteren Formen von Verbindungen zwischen der Teleskop-Hubvorrichtung 10 und der Umwelt möglich, bei denen durch die Verbindung die von der Hubvorrichtung aufgenommene Kraft an die Umwelt übertragen werden kann. Insbesondere, jedoch nicht ausschließlich, wird die Teleskop-Hubvorrichtung 10 vertikal angebracht.

Die Teleskop-Hubvorrichtung 10 kann beweglich mit der Umwelt verbunden sein. Hierzu kann beispielsweise das Außenrohr 20 über eine Linearführung mit der Umwelt verbunden sein, um größere Bewegungsamplituden des freien Endes der Teleksop-Hubvorrichtung 10 realisieren zu können.

Darüber hinaus kann die Teleskop-Hubvorrichtung 10 über eine horizontal bewegliche Lagerung mit der Umwelt verbunden sein, sodass die angehängte Last in drei Raumrichtungen geführt werden kann.

Zur Führung der Last folgt das freie Ende des Innenrohrs 30, an dem die Last befestigt ist, der Bewegung des Benutzers. Die Bewegung erfolgt indem der Benutzer die Last oder das freie Ende des Innenrohrs 30 manuell führt oder über eine externe Steuereinheit steuert.

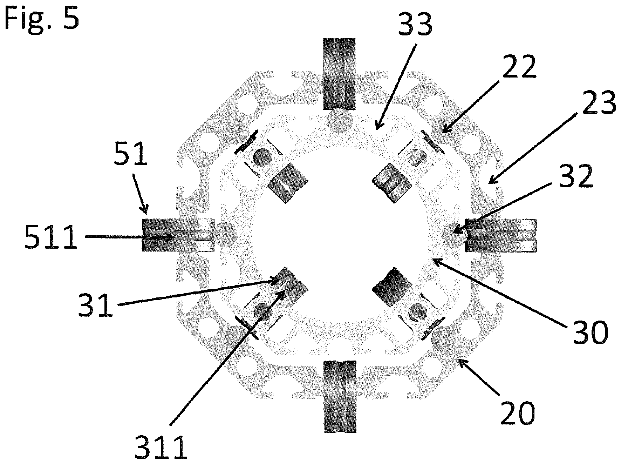

In Fig. 5 ist eine Querschnittansicht des Außenrohrs 20 und des Innenrohrs 30 der Teleskop-Hubvorrichtung 10 dargestellt, die beispielhaft als Achtkantgeometrie ausgebildet ist. Andere Querschnittgeometrien, zum Beispiel runde oder rechteckige, sind abhängig vom vorliegenden Lastfall. Das Außenrohr 20 weist an der äußeren und inneren Mantelfläche Nuten 23 auf. In mindestens einer der Nuten der inneren Mantelfläche ist eine Führungsschiene 22 angebracht. Das Innenrohr 30 weist an seiner äußeren Mantelfläche ebenfalls Nuten 33 auf. In mindestens einer der Nuten 33 der äußeren Mantelfläche des Innenrohrs 30 ist eine Führungsschiene 32 angebracht.

Die Nuten 23 an der äußeren Mantelfläche des Außenrohrs 20 dienen der Befestigung weiterer Elemente an der Teleskop-Hubvorrichtung 10. Somit kann die Teleskop-Hubvorrichtung 10 bedarfsgerecht modular um Komponenten erweitert werden, ohne dass dafür separate Anbindungsmöglichkeiten geschaffen werden müssen.

Fig. 2 zeigt das freie Ende der Teleskop-Hubvorrichtung 10 im eingefahrenen Zustand. Am freien Ende des Außenrohrs 20 ist eine Führungseinrichtung 50 angebracht, die mindestens drei Rollen 51 und mindestens eine Einstelleinrichtung 52 aufweist (In Fig. 2 ist eine bevorzugte Ausführungsform mit mehreren Rollenpaaren dargestellt). Die Rollen 51 können dabei gleichmäßig am Umfang der Führungseinrichtung 50 verteilt und entlang ihrer Rotationsachsen verschiebbar gelagert sein. Durch die bewegliche Lagerung können Fertigungstoleranzen zwischen der äußeren Mantelfläche des Innenrohrs 30 und der inneren Mantelfläche des Außenrohrs 20 ausgeglichen werden.

Die in Fig. 2 beispielhaft dargestellte Ausführungsform weist acht Rollen 51 innerhalb der Führungseinrichtung 50 des Außenrohrs 20 auf. Die Rotationsachsen von jeweils vier der acht Rollen 51 liegen in einer Ebene rechtwinklig zur Längsachse des Außenrohrs 20. Die Rollen 51 berühren die Führungsschienen 32 des Innenrohrs 30 und rollen darauf ab, wenn sich das Innenrohr 30 relativ zum Außenrohr 20 in axialer Richtung bewegt. Durch die Lagerung der Rollen 51 in zwei Ebenen, rechtwinklig zur Längsachse des Außenrohrs 20, kann eine radiale Verschiebung oder Verdrehung der Längsachsen des Innenrohrs 30 und des Außenrohrs 20 zueinander, aufgrund der besseren Abstützung des Innenrohrs 30 am Außenrohr 20 vermieden werden. Somit reduziert sich die Wahrscheinlichkeit, dass die Rohre während der Teleskopbewegung verkanten und es zu Beschädigungen und/oder Blockieren der Hubvorrichtung kommt. Darüber hinaus kann durch die größere Kontaktfläche der Rollen 51 entlang der Längsachse der Hubvorrichtung ein Großteil der Kräfte vom Innenrohr 30 über die Führungseinrichtung 50 an das Außenrohr 20 übertragen werden, welches aufgrund seines größeren Querschnitts eine höhere Biege- und Torsionssteifigkeit als das Innenrohr 30 aufweist.

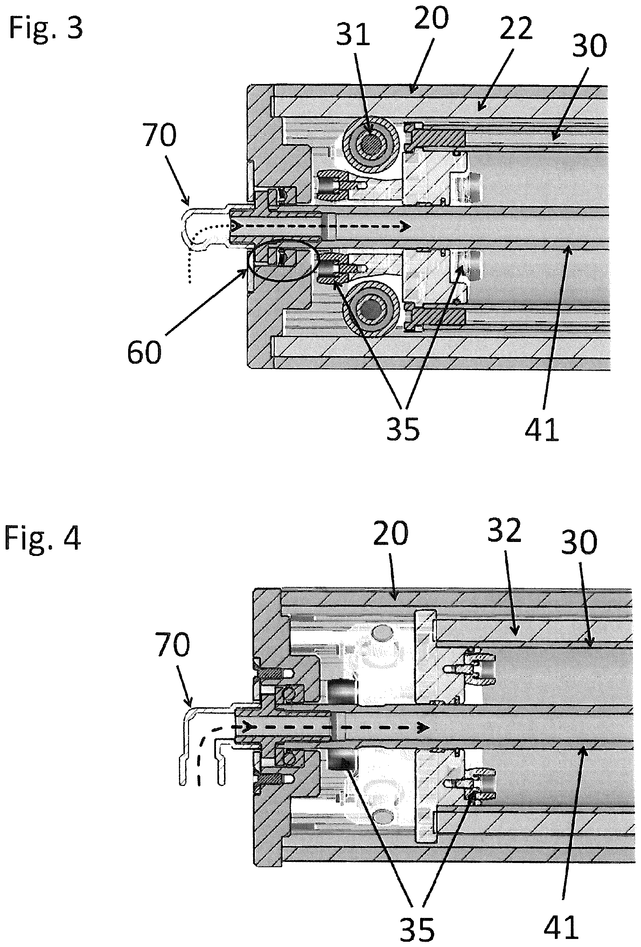

Figuren 3 und 4 zeigen das nicht-freie Ende der Teleskop-Hubvorrichtung 10. An diesem Ende weist das Innenrohr 30 mindestens drei Rollen 31 auf, die gleichmäßig in Umfangsrichtung verteilt sein können und die die Führungsschienen 22 des Außenrohrs 20 berühren bzw. darauf abrollen, wenn sich das Innenrohr 30 relativ zum Außenrohr 20 in axialer Richtung bewegt. Entlang ihrer Rotationsachse können die Rollen 31 verschieblich gelagert sein.

Die Rollen 31 des Innenrohrs 30 sowie die Rollen 51 der Führungseinrichtung 50 können aus Stahl mit einer gehärteten Randschicht bestehen. Vorzugsweise sind die Führungsschienen 32 des Innenrohrs 30 und die Führungsschienen 22 des Außenrohrs 20 aus einem weicheren Material hergestellt als die Rollen 51 und 31, die auf ihnen abrollen. Daher tritt Materialverschleiß aufgrund der Bewegung des Innenrohrs 30 relativ zum Außenrohr 20 vorzugsweise an den Führungsschienen 22 bzw. 32 auf. Durch ihre Befestigung in den Nuten 23 bzw. 33 können sie auf einfache Weise ausgetauscht werden, wodurch sich der verschleißbedingte Wartungsaufwand der Teleskop-Hubvorrichtung 10 reduziert.

Die mindestens eine Einstelleinrichtung 52 der Führungseinrichtung 50 ist konfiguriert, um den Anpressdruck der Rollen 51 an die Führungsschienen 32 anzupassen. Dies kann über eine oder mehrere einstellbare Federn pro Führungseinrichtung 50 realisiert werden. Die Anzahl der Einstelleinrichtungen 52 wird so gewählt, dass der Anpressdruck der Rollen 51 an die Führungsschienen 32 in alle Koordinatenrichtungen der Ebene rechtwinklig zur Längsachse der Hubvorrichtung einstellbar ist. Somit ist auch indirekt der Anpressdruck der Rollen 31 an die Führungsschienen 22 einstellbar. Der Austausch der Rollen und/oder Führungsschienen, aufgrund von verfrühtem Verschleiß, kann somit vermieden werden, da durch die Einstelleinrichtungen 52 stets gewährleistet werden kann, dass die Kontaktkraft zwischen den Rollen und ihren zugehörigen Führungsschienen nicht zu hoch und nicht zu niedrig ist.

Die Führungseinrichtung 50 kann außerdem eine Bremseinrichtung aufweisen, um die Bewegung des Innenrohrs 30 gegenüber dem Außenrohr 20 bei Lastwechseln zu bremsen. Dies kann über mindestens einen Bremsklotz realisiert werden, der gegen die äußere Mantelfläche des Innenrohrs 30 gedrückt wird. Der mindestens eine Bremsklotz besteht vorzugsweise aus einem weicheren Material als das Innenrohr, beispielsweise aus Kunststoff, und wird pneumatisch, hydraulisch oder elektrisch bewegt. Hierbei kann die gleiche Energieform, die durch den Kolben 40 zur Bewegung des Innenrohrs 30 verwendet wird, genutzt werden. Durch den Einsatz einer Bremseinrichtung kann die auf das Innenrohr 30 bei schnellen Lastwechseln wirkende Kraft reduziert werden.

Das Außenrohr 20 und das Innenrohr 30 können aus dem gleichen Material gefertigt sein, beispielsweise Aluminium. Andere Materialien oder Materialkombinationen bei denen das Außenrohr 20 nicht das gleiche Material aufweist wie das Innenrohr 30, sind ebenfalls möglich.

Das Innenrohr 30 kann an seinem freien Ende außerdem einen Einsatz 34 aufweisen, der in das Innenrohr 30 hineinragt, beispielsweise um 100mm. Der Einsatz 34 besteht vorzugsweise aus einem Material, welches eine höhere Härte und/oder Festigkeit aufweist als das Material des Innenrohrs 30. Somit wird das freie Ende des Innenrohrs 30 verstärkt. Abhängig vom Anwendungsfall der Teleskop-Hubvorrichtung kann die Länge, um die der Einsatz 34 in das Innenrohr 30 hineinragt, variieren.

Wie in Figuren 2 bis 4 dargestellt ist, besteht der Kolben 40 aus einer Kolbenstange 41 und einem Kolbenkopf 42 und ragt von dem nicht-freien Ende der Teleskop-Hubvorrichtung 10 in das Außenrohr 20 sowie das Innenrohr 30. Die Kolbenstange 41 ist konfiguriert um Luft, beispielsweise aus einem externen Reservoir, über eine Öffnung 70 zum Kolbenkopf 42 zu leiten bzw. von dort abzuführen. Der Kolbenkopf 42 weist an seiner dem nicht-freien Ende der Teleskop-Hubvorrichtung 10 zugewandten Seite Löcher 43 auf, durch die die über die Kolbenstange 41 zugeführte Luft in den Hohlraum 80 des Innenrohrs 30 geleitet wird bzw. daraus abgeführt wird, wodurch sich das Innenrohr 30 relativ zum Kolben 40 und Außenrohr 20 axial bewegt.

Weiterhin ist der Kolbenkopf 42 gegenüber der inneren Mantelfläche des Innenrohrs 30 über eine Dichtung 44 abgedichtet. Diese kann eine Ringdichtung sein, insbesondere eine K-Ring Dichtung, die durch ihre bedingte Flexibilität Fertigungstoleranzen der inneren Mantelfläche des Innenrohrs 30 ausgleichen kann.

Die Teleskop-Hubvorrichtung 10 kann am nicht-freien Ende des Innenrohrs 30 außerdem Pufferelemente 35 aufweisen. Die Pufferelemente 35, die dem nicht-freien Ende des Außenrohrs 20 zugewandt sind, begrenzen im eingefahrenen Zustand die Bewegung des Innenrohrs 30 innerhalb des Außenrohrs 20, sodass das innere Ende des Innenrohrs 30 nicht mit dem nicht-freien Ende des Außenrohrs 20 kollidieren kann. Analog dazu begrenzen die Pufferelemente des Innenrohrs 30, die dem freien Ende zugewandt sind, im ausgefahrenen Zustand die Bewegung des Innenrohrs 30 gegenüber dem Kolben 40 und können im maximal ausgefahrenen Zustand den Kolbenkopf 42 berühren.

Die Lagerung der Kolbenstange 41 am nicht-freien Ende der Teleskop-Hubvorrichtung 10 erfolgt über ein Lager 60, welches beispielsweise als eine pneumatische Dreh-Durchführung ausgebildet sein kann. Alternativ kann jede beliebige Lagerform verwendet werden, die eine Rotation des freien Endes der Teleskop-Hubvorrichtung 10 um dessen Längsachse ermöglicht.

Die Teleskop-Hubvorrichtung 10 kann ferner Mittel aufweisen zur Bestimmung der absoluten und/oder relativen Position ihrer Komponenten im Raum. Dies umfasst insbesondere elektronische Messeinrichtungen mit denen sich die Position des freien, beweglichen Endes des Innenrohrs 30 bestimmen lässt. Die Messeinrichtung kann beispielsweise in der Führungseinrichtung 50 positioniert sein.

Die Rollen 31 des Innenrohrs 30 können an ihren Laufflächen Nuten 311 aufweisen, die mit den Führungsschienen 22 des Außenrohrs 20 zusammenwirken. Die Rollen 51 der Führungseinrichtung 50 können an ihren Laufflächen ebenfalls Nuten 511 aufweisen, die mit den Führungsschienen 32 des Innenrohrs 30 zusammenwirken. Durch das Zusammenwirken der Nuten und Führungsschienen vergrößert sich die Kontaktfläche zwischen beiden Elementen und eine bessere Kraftübertragung wird ermöglicht.

Weiterhin können, in Querschnittansicht, die Rollen 31 des Innenrohrs 30 versetzt zu den Rollen 51 der Führungseinrichtung 50 angeordnet sein, wie in Fig. 5 dargestellt. Der Versatz kann mit der Querschnittgeometrie der Rohre und der Anzahl der Rollen variieren und ist nicht auf die abgebildeten 45 Grad beschränkt.

Die erfindungsgemäße Teleskop-Hubvorrichtung 10 kann darüber hinaus einen Sicherheitsmechanismus aufweisen, der die Bewegung des Innenrohrs 30 gegen ein vollständiges Ausfahren aus dem Außenrohr 20 stoppt, falls die das Innenrohr 30 bewegende Kraft nicht mehr vorhanden ist. Dies kann beispielsweise durch einen Bruch des Kolbens 40 und/oder einen Defekt in der Pneumatik bzw. Hydraulik oder Elektrik erfolgen.

Der Sicherheitsmechanismus kann als ein Anschlagelement am Querschnitt des inneren Endes des Innenrohrs 30 ausgebildet sein, und den Querschnitt des Innenrohrs 30 an dieser Stelle vergrößern. Bei Kontakt des querschnittverbreiterten Bereichs des Innenrohrs 30 mit dem Querschnitt des Außenrohrs 20 oder dem Querschnitt der Führungseinrichtung 50, stößt das Anschlagelement an den Querschnitt des Außenrohrs 20 oder den Querschnitt der Führungseinrichtung 50 an und blockiert somit die weitere axiale Ausfahr-Bewegung des Innenrohrs 30.

In einer zweiten Ausführungsform kann die erfindungsgemäße Teleskop-Hubvorrichtung 10 um 180 Grad gedreht sein, sodass ihr nicht-freies Ende mit dem Boden verbunden ist. Die damit einhergehenden notwendigen funktionalen Änderungen der Elemente der Teleskop-Hubvorrichtung 10, beispielsweise am Kolbenkopf 42, sind für den Fachmann offensichtlich und werden daher nicht im Detail erläutert.

Gemäß einem weiteren Aspekt der vorliegenden Erfindung können außerdem mehrere der beschriebenen Teleskop-Hubvorrichtungen 10 seriell miteinander verbunden sein und ein Teleskop-Hubsystem bilden. Die Verbindung der Teleskop-Hubvorrichtungen 10 kann in verschiedene Raumrichtungen erfolgen, sodass mit dem Hubsystem einen Last in mehreren Raumrichtungen geführt werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Teleskop-Hubvorrichtung (10) zur linearen Führung von Lasten, die aufweist:
ein Außenrohr (20), ein Innenrohr (30), einen innerhalb des Innenrohrs angebrachten Kolben (40) und eine Führungseinrichtung (50), wobei
das Innenrohr (30) zumindest teilweise innerhalb des Außenrohrs (20) geführt wird;
der Kolben (40) konfiguriert ist, das Innenrohr (30) relativ zum Außenrohr (20) in axialer Richtung zu bewegen;
die Führungseinrichtung (50) am freien Ende der Teleskop-Hubvorrichtung (10) mit dem Außenrohr (20) verbunden ist;
**dadurch gekennzeichnet dass**:
das innere Ende des Innenrohrs (30) Rollen (31) aufweist, die entlang ihrer Rotationsachsen verschieblich gelagert sind, um das Innenrohr (30) relativ zum Außenrohr (20) in axialer Richtung zu führen;
die Führungseinrichtung (50) Rollen (51) aufweist, die entlang ihrer Rotationsachsen verschieblich gelagert sind, um das Innenrohr (30) relativ zum Außenrohr (20) durch die Führungseinrichtung (50) hindurch in axialer Richtung zu führen;
das Innenrohr (30) an seiner Außenseite mehrere jeweils in Nuten (33) aufgenommene Führungsschienen (32) aufweist;
das Außenrohr (20) an seiner Innenseite mehrere jeweils in Nuten (23) aufgenommene Führungsschienen (22) aufweist;
die Rollen (51) der Führungseinrichtung (50) des Außenrohrs (20) so angeordnet sind, dass sie auf den Führungsschienen (32) des Innenrohrs abrollen; und
die Rollen (31) des Innenrohrs (30) so angeordnet sind, dass sie auf den Führungsschienen (22) des Außenrohrs (20) abrollen.

2. Teleskop-Hubvorrichtung (10) gemäß Anspruch 1, wobei der Querschnitt des Außenrohrs (20) und der Querschnitt des Innenrohrs (30) eine Achtkantgeometrie aufweisen.

3. Teleskop-Hubvorrichtung (10) gemäß einem der voranstehenden Ansprüche, wobei
der Kolben (40) eine Kolbenstange (41) und einen Kolbenkopf (42) aufweist;
die Kolbenstange (41) konfiguriert ist, um Luft in den Kolbenkopf (42) zu-/abzuführen; und
der Kolbenkopf (42) mehrere Löcher (43) aufweist, durch die die zu-/abgeführte Luft abströmen oder zuströmen kann.

4. Teleskop-Hubvorrichtung (10) gemäß einem der voranstehenden Ansprüche, wobei das freie Ende des Innenrohrs (30) einen Einsatz (34) aufweist, der sich ins Innere des Innenrohrs in axialer Richtung erstreckt und aus einem härteren Material als das Innenrohr besteht und konfiguriert ist, um das freie Ende des Innenrohrs zu verstärken.

5. Teleskop-Hubvorrichtung (10) gemäß einem der voranstehenden Ansprüche, wobei das innere Ende des Innenrohrs (30) und die Führungseinrichtung (50) des Außenrohrs (20) jeweils mindestens drei Rollen (31; 51) aufweisen.

6. Teleskop-Hubvorrichtung (10) gemäß Anspruch 5, wobei das innere Ende des Innenrohrs (30) vier Rollen (31) aufweist, die einander vorzugsweise paarweise gegenüberliegen, und/oder wobei die Führungseinrichtung des Außenrohrs (20) vier Rollen (51) aufweist, die einander vorzugsweise paarweise gegenüberliegen.

7. Teleskop-Hubvorrichtung (10) gemäß Anspruch 5 oder 6, wobei die Führungseinrichtung (50) des Außenrohrs (20) acht Rollen (51) aufweist, die in zwei Gruppen von jeweils vier Rollen in unterschiedlichen Ebenen, die sich rechtwinklig zur Längsachse der Hubvorrichtung (10) erstrecken, angebracht sind.

8. Teleskop-Hubvorrichtung (10) gemäß einem der voranstehenden Ansprüche, wobei mindestens eine der Rollen (31) des Innenrohrs (30) und/oder mindestens eine der Rollen (51) der Führungseinrichtung (50) des Außenrohrs (20) jeweils an der Lauffläche eine Nut (311; 511) aufweist, die mit der jeweiligen Führungsschiene (22; 32) zusammenwirkt.

9. Teleskop-Hubvorrichtung (10) gemäß einem der Ansprüche 6 bis 8, wobei die Rollen (31) des Innenrohrs (30) in der Ebene senkrecht zur Längsachse der Hubvorrichtung jeweils mit 45 Grad Versatz zu den Rollen (51) der Führungseinrichtung (50) angeordnet sind.

10. Teleskop-Hubvorrichtung (10) gemäß einem der voranstehenden Ansprüche, wobei die Führungseinrichtung (50) ferner eine Einstelleinrichtung (52) aufweist, die konfiguriert ist, um den Anpressdruck der Rollen (51) der Führungseinrichtung (50) gegen ihre jeweilige Führungsschiene (32) einzustellen.

11. Teleskop-Hubvorrichtung (10) gemäß einem der voranstehenden Ansprüche, wobei die Führungseinrichtung (50) ferner eine Bremseinrichtung aufweist.

12. Teleskop-Hubvorrichtung (10) gemäß Anspruch 11, wobei die Bremseinrichtung zwei Bremsklötze aufweist, die an einander gegenüberliegenden Seiten der Führungseinrichtung (50) angebracht sind, und konfiguriert sind, um pneumatisch gegen das Innenrohr (30) der Teleskop-Hubvorrichtung (10) gedrückt zu werden.

13. Teleskop-Hubvorrichtung (10) gemäß einem der vorstehenden Ansprüche, wobei der Kolben (40) ein pneumatisch, hydraulisch oder elektrisch betriebener Kolben ist.

14. Teleskop-Hubsystem bestehend aus mehreren Teleskop-Hubvorrichtungen (10) gemäß einem der voranstehenden Ansprüche, wobei
die Teleskop-Hubvorrichtungen (10) seriell miteinander verbunden sind; und
mindestens zwei Teleskop-Hubvorrichtungen (10) des Teleskop-Hubsystems in unterschiedliche Raumrichtungen orientiert sind.

15. Pneumatische Dreh-Durchführungseinrichtung für eine Teleskop-Hubvorrichtung (10) gemäß einem der Ansprüche 1 bis 13 oder für ein Teleskop-Hubsystem gemäß Anspruch 14, wobei die pneumatische Dreh-Durchführungseinrichtung konfiguriert ist, um den Kolben (40) zu lagern, sodass eine Rotation der Teleskop-Hubvorrichtung (10) um ihre Längsachse ermöglicht wird.

## Claims

1. A telescopic lifting device (10) for linear guidance of loads, the device comprising:
an outer tube (20), an inner tube (30), a piston (40) provided within the inner tube and guiding means (50), wherein
at least part of the inner tube (30) is guided within the outer tube (20);
the piston (40) is configured to move the inner tube (30) axially relative to the outer tube (20);
the guiding means (50) is connected to the outer tube (20) at the free end of the telescopic lifting device (10),
**characterized in that**:
the inner end of the inner tube (30) is provided with rollers (31) that are slidingly supported along their rotational axes so as to guide the inner tube (30) axially with respect to the outer tube (20);
the guiding means (50) comprises rollers (51) that are slidingly supported along their rotational axes so as to axially guide the inner tube (30) relative to the outer tube (20) through the guiding means (50);
the inner tube (30) comprises at its outer surface a plurality of guide rails (32), each of which is received in a groove (33);
the outer tube (20) comprises at its inner surface a plurality of guide rails (22), each of which is received in a groove (23);
the rollers (51) of the guiding unit (50) of the outer tube (20) are arranged so as to roll off on the guiding rails (32) of the inner tube; and
the rollers (31) of the inner tube (30) are arranged so as to roll off on the guiding rails (22) of the outer tube (20).

2. The telescopic lifting device (10) according to claim 1, wherein the outer tube (20) and the inner tube 30 have an octagonal cross-section.

3. The telescopic lifting device (10) according any of the preceding claims, wherein
the piston (40) comprises a piston rod (41) and a piston head (42);
the piston rod (41) is configured to supply air into and/or discharge air from the piston head (42); and
the piston head (42) is provided with a plurality of holes (43) through which the supplied/discharged air may flow in or out.

4. The telescopic lifting device (10) according to any of the preceding claims, wherein
the free end of the inner tube (30) is provided with an insert (34) that axially extends into the inside of the inner tube, is made of a material that is harder than that of the inner tube and is configured to reinforce the free end of the inner tube.

5. The telescopic lifting device (10) according to any of the preceding claims, wherein both the inner end of the inner tube (30) and the guiding means (50) of the outer tube (20) comprise at least three rollers (31; 51).

6. The telescopic lifting device (10) according to claim 5, wherein the inner end of the inner tube (30) comprises four rollers (31) that are preferably arranged in pairs facing each other and/or wherein the guiding means of the outer tube (20) comprises four rollers (51) that are preferably arranged in pairs facing each other.

7. The telescopic lifting device (10) according to claim 5 or 6, wherein the guiding means (50) of the outer tube (20) comprises eight rollers (51) which are provided in two groups of four rollers in different planes extending perpendicularly to the longitudinal axis of the lifting device (10).

8. The telescopic lifting device (10) according to any of the preceding claims, wherein the tread of at least one of the rollers (31) of the inner tube (30) and/or the tread of at least one of the rollers (51) of the guiding means (50) of the outer tube (20) is/are provided with a groove (311; 511) interacting with the respective guide rail (22; 32).

9. The telescopic lifting device (10) according to any of claims 6 to 8, wherein the rollers (31) of the inner tube (30) are arranged in the plane perpendicular to the longitudinal axis of the lifting device with a 45° offset with respect to the rollers (51) of the guiding means (50).

10. The telescopic lifting device (10) according to any of the preceding claims, wherein the guiding means (50) is further provided with adjusting means (52) configured to adjust the contact pressure of the rollers (51) of the guiding means (50) on the respective guiding rail (32).

11. The telescopic lifting device (10) according to any of the preceding claims, wherein the guiding means (50) is further provided with braking means.

12. The telescopic lifting device (10) according to claim 11, wherein the braking means comprises two brake shoes provided at opposite sides of the guiding means (50) and configured to be pneumatically pressed against the inner tube (30) of the telescopic lifting device (10).

13. The telescopic lifting device (10) according to any of the preceding claims, wherein the piston (40) is a pneumatically, hydraulically or electrically operated piston.

14. A telescopic lifting system comprising a plurality of telescopic lifting devices (10) according to any of the preceding claims, wherein
the telescopic lifting devices (10) are connected in series; and
at least two telescopic lifting devices (10) of the telescopic lifting system are oriented in different spatial directions.

15. A pneumatic rotary bushing for a telescopic lifting device (10) according to any of claims 1 to 13 or for a telescopic lifting system according to claim 14, wherein the pneumatic rotary bushing is configured to support the piston (40) so as to enable rotation of the telescopic lifting device (10) about its longitudinal axis.

## Revendications

1. Dispositif de levage télescopique (10) pour le guidage linéaire de charges, comprenant :
un tube extérieur (20), un tube intérieur (30), un piston (40) disposé dans le tube intérieur et un moyen de guidage (50), où
le tube intérieur (30) est au moins partiellement guidé à l'intérieur du tube extérieur (20) ;
le piston (40) est prévu pour déplacer le tube intérieur (30) dans la direction axiale par rapport au tube extérieur (20) ;
le moyen de guidage (50) est raccordé au tube extérieur (20) à l'extrémité libre du dispositif de levage télescopique (10) ;
**caractérisé en ce que** :
l'extrémité intérieure du tube intérieur (30) comporte des rouleaux (31) montés de manière à être mobiles le long de leurs axes de rotation, pour pouvoir guider le tube intérieur (30) dans la direction axiale par rapport au tube extérieur (20) ;
le moyen de guidage (50) comporte des rouleaux (51) montés de manière à être mobiles le long de leurs axes de rotation, pour guider le tube intérieur (30) au travers du moyen de guidage (50) par rapport au tube extérieur (20) dans la direction axiale ;
le tube intérieur (30) présente plusieurs rails de guidage (32) logés dans des rainures (33) respectives sur sa face extérieure ;
le tube extérieur (20) présente plusieurs rails de guidage (22) logés dans des rainures (23) respectives sur sa face intérieure ;
les rouleaux (51) du moyen de guidage (50) du tube extérieur (20) sont disposés de manière à rouler sur les rails de guidage (32) du tube intérieur ; et
les rouleaux (31) du tube intérieur (30) sont disposés de manière à rouler sur les rails de guidage (22) du tube extérieur (20).

2. Dispositif de levage télescopique (10) selon la revendication 1, où la section transversale du tube extérieur (20) et la section transversale du tube intérieur (30) présentent une géométrie octogonale.

3. Dispositif de levage télescopique (10) selon l'une des revendications précédentes, où le piston (40) comprend une tige (41) de piston et une tête (42) de piston ;
la tige (41) de piston est prévue pour refouler/évacuer de l'air dans la tête (42) de piston; et
la tête (42) de piston présente plusieurs trous (43) par lesquels peut s'écouler l'air refoulé/évacué.

4. Dispositif de levage télescopique (10) selon l'une des revendications précédentes, où l'extrémité libre du tube intérieur (30) présente un insert (34) qui s'étend en direction axiale dans le tube intérieur, est constitué d'un matériau plus dur que le tube intérieur et est prévu pour renforcer l'extrémité libre du tube intérieur.

5. Dispositif de levage télescopique (10) selon l'une des revendications précédentes, où l'extrémité intérieure du tube intérieur (30) et le moyen de guidage (50) du tube extérieur (20) présentent chacun au moins trois rouleaux (31 ; 51).

6. Dispositif de levage télescopique (10) selon la revendication 5, où l'extrémité intérieure du tube intérieur (30) présente quatre rouleaux (31) se faisant préférentiellement face par paires respectives, et/ou où le moyen de guidage du tube extérieur (20) présente quatre rouleaux (51) se faisant préférentiellement face par paires respectives.

7. Dispositif de levage télescopique (10) selon la revendication 5 ou la revendication 6, où le moyen de guidage (50) du tube extérieur (20) présente huit rouleaux (51) disposés en deux groupes de quatre rouleaux sur des plans différents, s'étendant perpendiculairement à l'axe longitudinal du dispositif de levage (10).

8. Dispositif de levage télescopique (10) selon l'une des revendications précédentes, où au moins un des rouleaux (31) du tube intérieur (30) et/ou au moins un des rouleaux (51) du moyen de guidage (50) du tube extérieur (20) présente une rainure (311 ; 511) respective sur la surface de roulement, laquelle coopère avec le rail de guidage (22 ; 32) correspondant.

9. Dispositif de levage télescopique (10) selon l'une des revendications 6 à 8, où les rouleaux (31) du tube intérieur (30) sont disposés sur le plan perpendiculairement à l'axe longitudinal du dispositif de levage, chacun avec 45 degrés de décalage par rapport aux rouleaux (51) du moyen de guidage (50).

10. Dispositif de levage télescopique (10) selon l'une des revendications précédentes, où le moyen de guidage (50) comprend en outre un dispositif de réglage (52) prévu pour régler la pression d'application des rouleaux (51) du moyen de guidage (50) sur leur rail de guidage (32) respectif.

11. Dispositif de levage télescopique (10) selon l'une des revendications précédentes, où le moyen de guidage (50) comprend en outre un dispositif de freinage.

12. Dispositif de levage télescopique (10) selon la revendication 11, où le dispositif de freinage comprend deux patins de frein disposés sur des côtés opposés du moyen de guidage (50) et prévus pour être serrés pneumatiquement contre le tube intérieur (30) du dispositif de levage télescopique (10).

13. Dispositif de levage télescopique (10) selon l'une des revendications précédentes, où le piston (40) est un piston commandé pneumatiquement, hydrauliquement ou électriquement.

14. Système de levage télescopique constitué de plusieurs dispositifs de levage télescopiques (10) selon l'une des revendications précédentes, où
les dispositifs de levage télescopiques (10) sont raccordés en série les uns aux autres ; et où
au moins deux dispositifs de levage télescopiques (10) du système de levage télescopique sont orientés dans des directions spatiales différentes.

15. Dispositif pneumatique de rotation pour un dispositif de levage télescopique (10) selon l'une des revendications 1 à 13 ou pour un système de levage télescopique selon la revendication 14, ledit dispositif pneumatique de rotation étant prévu pour loger le piston (40) de manière à permettre une rotation du dispositif de levage télescopique (10) autour de son axe longitudinal.
